# EUROPEAN PATENT SPECIFICATION

(11) **EP 3 679 886 B1**
(45) Date of publication and mention of the grant of the patent: **04.08.2021**
(21) Application number: 18804033.1
(22) Date of filing: 27.08.2018
(51) Int. Cl.: A61C 8/00

(54) **METHOD FOR THE MANUFACTURING OF A DENTAL PROSTHESIS WITH AN ANGLED INTERNAL THROUGH HOLE**
VERFAHREN ZUR HERSTELLUNG EINER ZAHNPROTHESE MIT EINER GEWINKELTEN INNEREN DURCHBOHRUNG
PROCÉDÉ DE FABRICATION D'UNE PROTHÈSE DENTAIRE AVEC UN CONDUIT INTÉRIEUR PASSANT ANGULAIRE

(30) Priority: 08.09.2017 ES 201731097
(43) Date of publication of application: 15.07.2020
(73) Proprietor: Biotechnology Institute, I MAS D, S.L., 01005 Vitoria (ES)
(72) Inventor: ANITUA ALDECOA, Eduardo, 01005 Vitoria (ES)
(74) Representative: Cueto, Sénida
(86) International application number: PCT/ES2018/070574
(87) International publication number: WO 2019/048723

(56) References cited:
- WO-A1-2008/051163
- WO-A1-2013/004387
- ES-A1- 2 585 733
- US-A1- 2014 178 836

## Description

### Field of the invention

The invention relates to prosthetic components intended to be fixed directly or indirectly to an oseointegrated dental implant in the bone of a patient and. more specifically, to a method of manufacturing a dental prosthesis provided with an angled inner through bore or channel, i.e. terminated in two end bores or orifices that form an angle other than zero between each other.

### Prior art

A dental implant is a metal part, usually made of titanium, which is placed in the maxillary bone (jawbone) of a patient and is used as an anchoring to secure a dental prosthesis intended to imitate and replace one or more of the patient's teeth. The dental prosthesis is supported and held by one or more dental implants placed in coordination with the shape, quality and quantity of the patient's natural bone.

Normally, a blind hole or alveolus, in which the dental implant can be placed, is first drilled in the patient's bone. Once the alveolus is formed, the dental implant is inserted, usually by threading the dental implant into the alveolus. The implant usually remains below the patient's gum, i.e. it forms a "substructure". Once the implant has been inserted, some time is permitted to elapse so as to allow osseointegration of the implant to take place, i.e. to allow the formation of an intimate and extremely resistant connection of the implant with the bone, by means of which the implant is firmly fixed to the bone and is capable of withstanding chewing and other forces potentially exerted on the teeth. When osseointegration has finished, one or more intermediate parts are usually connected to the implant, traversing the gum and providing an over-the-gum connector, to which the dental prosthesis can, in turn, be fixed. The connections between the implant, the intermediate part or parts and the dental prosthesis are usually carried out using screws. For this purpose, the implant, the intermediate part(s) and the dental prosthesis are provided with internal holes intended to receive said screws. These holes can be blind or through holes, depending on the purpose of each specific part.

In practice, given the irregularity of the shapes and dimensions of teeth, of the patient's bone and especially of the occlusion (the contact surface of each piece with its antagonist), it is often impossible for the central longitudinal axis of the dental implant to be aligned with the longitudinal central axis of the dental prosthesis attached to the implant. This means, in practice, that the dental prosthesis very often has to be installed inclined or angled in relation to the dental implant. The greater the angulation permitted by the system composed of the dental implant, associated intermediate parts and dental prosthesis, the greater freedom and ease the dental surgeon (odontologist) will have for designing and installing the dental prosthesis.

This angulation can be achieved in several ways, one of which is to manufacture the dental prosthesis with an internal through hole at an angle, instead of a straight hole. More specifically, in a first end of the dental prosthesis, intended to be oriented towards the dental implant, a first hole is made intended to be aligned with the longitudinal central axis of the implant. In a second end of the dental prosthesis, distant from the dental implant, a second hole is made. The second hole is connected on the inside of the dental implant with the first hole and forms an angle different from zero (or different from 180°) with the first hole and the longitudinal central axis of the dental implant. This allows that, in case the dental implant must be installed askew in the patient's bone, the dental prosthesis can still be placed so that it is aligned with the other teeth.

In order to install the angled dental prosthesis, the angled dental prosthesis is placed over the dental implant or intermediate part(s) and a fixing screw is inserted through the second hole of the dental prosthesis. The screw is moved forward inside the dental prosthesis and is rotated in the connection area between the two holes, so as to then move the screw through the first hole until it is placed in position inside the implant or intermediate part(s). Next, the screw is tightened using a ball end key wrench, which is inserted through the second hole of the dental prosthesis and enables the screw to be tightened at a certain angle, i.e. without the wrench being aligned with the screw. Once the screw has been tightened, the second hole is closed with cement or another similar substance.

The dental prosthesis is manufactured such that it is customized for each patient and each case. This includes not only the external shape of the dental prosthesis, but also the shape and angulation of the first and second holes of the dental prosthesis (in the event that the dental prosthesis must be angled in relation to the dental implant.

Examples of prior art are provided by US2014178836 and WO2013004387.

Disclosed herein is a new design of angled dental prosthesis that enables easy, fast and efficient insertion of the screw through the dental prosthesis, as well as an equally improved removal of the screw should it be necessary.

An objective of the invention is to propose a method of manufacturing an angled dental prosthesis that is simple to execute, has a reasonable cost and allows very varied angles to be achieved and therefore solves a large number of practical cases.

### Brief description of the invention

The invention is as defined in the appended claims.

Disclosed herein is a dental prosthesis intended to be supported by a dental implant. The dental prosthesis comprises an inner bore formed by a first hole and a second hole connected by an angled connection area formed at an angle between 0° and 180°. The angled connection area comprises an outer area and side areas forming an elbow devoid of protruding edges directed towards the interior of the inner bore. This elbow facilitates the insertion and removal of a screw through the inner bore during the assembly or disassembly of the dental prosthesis on a dental implant.

The invention consists in a method of manufacturing or machining a dental prosthesis intended to receive a screw therewithin so as to secure said dental prosthesis to a dental implant or to intermediate part(s) which are, in turn, connected to a dental implant. In this method, the starting point is a main body of a dental prosthesis. Said main body is provided with a first end intended to be oriented towards a dental implant and a second end opposite said first end. A first hole is then drilled in said first end in a first direction. Next, an intermediate area of said first hole is milled and widened, with a widened area being obtained. The head of the screw will be supported on the base of this widened area and the assembly will be tightened. In turn, a second hole is drilled in said second end in a second direction, where said second direction forms an angle other than zero with the first direction. Said second hole extends to the first hole. Then, an inner end of the first hole protruding from the second hole is milled and widened, so as to form an elbow.

In this way, a machining method is proposed which consists in creating the angled through bore in the dental prosthesis through a combination of drilling, milling, and smoothing and profiling the interior area of the irregular surfaces resulting from machining of the first hole and second hole. In this way, the cross sections of the entry sections for the screw (i.e. the outer ends of the first hole and the second hole) are kept to minimum dimensions, while inside, at the intersection of both holes, a greater volume or width is achieved which allows rotation of the screw, especially the rotation of the head in the elbow area. There are no edges or surfaces in the path of the screw on which the screw could get snagged and which could make the correct placement of the screw difficult.

### Brief description of the drawings

Details of the invention can be seen in the accompanying drawings, which do not seek to restrict the scope of the invention:
- Figure 1 shows a cross-sectional front elevation view of a dental prosthesis at the beginning of execution of an example of a manufacturing method according to the invention.
- Figure 2 shows a cross-sectional front elevation view illustrating a first step of the method.
- Figure 3 shows a cross-sectional front elevation view of the dental prosthesis, once the step in the previous figure has been executed.
- Figure 4 shows a cross-sectional front elevation view illustrating a second step of the method.
- Figure 5 shows a cross-sectional front elevation view of the dental prosthesis, once the step in the previous figure has been executed.
- Figure 6 shows a cross-sectional front elevation view illustrating a third step of the method.
- Figure 7 shows a cross-sectional front elevation view of the dental prosthesis, once the step in the previous figure has been executed.
- Figure 8 shows a cross-sectional front elevation view illustrating a fourth step of the method.
- Figure 9 shows a cross-sectional front elevation view of the dental prosthesis, once the step in the previous figure has been executed.
- Figure 10 shows a cross-sectional view of the dental prosthesis in Figure 7, according to section plane A-A.
- Figure 11 shows a cross-sectional view of the dental prosthesis in Figure 9, according to section plane B-B.

### Detailed description of the invention

This disclosure proposes a dental prosthesis with an angled channel or inner bore intended to receive a screw in order to fix said dental prosthesis to a dental implant or to intermediate part(s) that are in turn connected to a dental implant. Methods of manufacturing said dental prosthesis are also proposed.

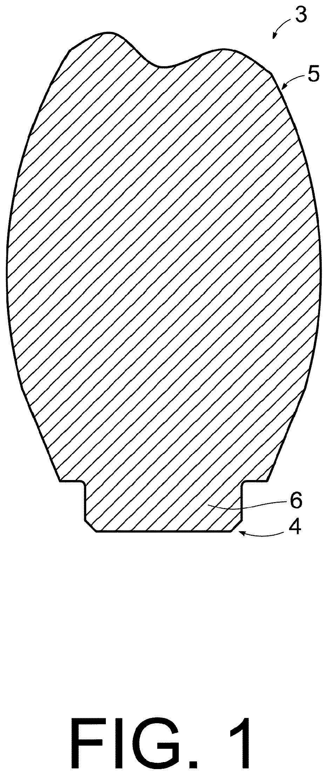

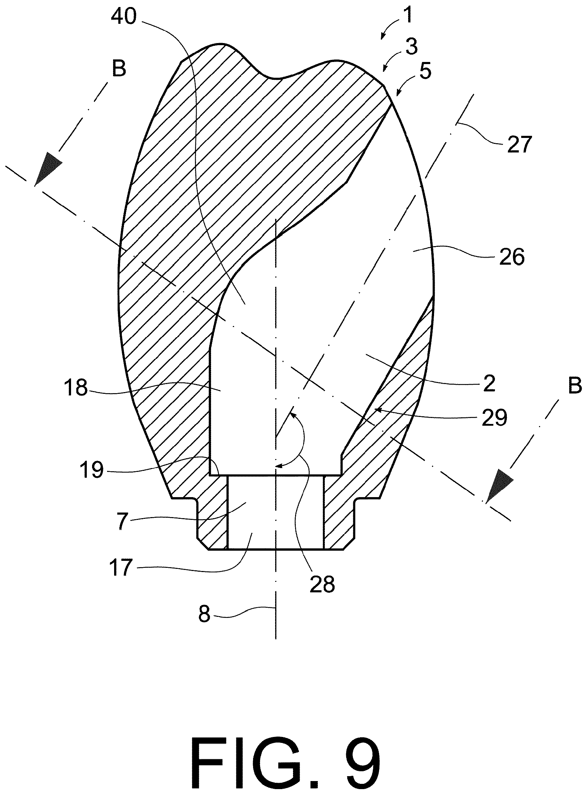

An example of a dental prosthesis (1) obtained according to the invention is shown in Figure 9. As shown, said dental prosthesis (1) includes an angled inner through bore (2), i.e. an inner bore with a non-rectilinear shape and that extends through the dental prosthesis (1). In turn, Figures 1 to 8 show a sequence of steps of a method of manufacturing said dental prosthesis (1) according to the invention.

Referring initially to Figure 1, the method starts from a main body (3), from which the final prosthesis (1) will be formed as explained below. The initial main body (3) can be a solid part, as shown in the figure, and is provided with a first end (4) and a second end (5) opposite or approximately opposite said first end (4). The first end (4) is intended to be oriented towards a dental implant, not represented in the figures. In the present embodiment, by way of example, the first end (4) of the main body (3) has a narrower termination or neck (6) intended to be housed in a space or recess of a dental implant or of an intermediate part that in turn is supported by a dental implant. The second end (5), in turn, has an outer profile or contour that imitates a natural tooth.

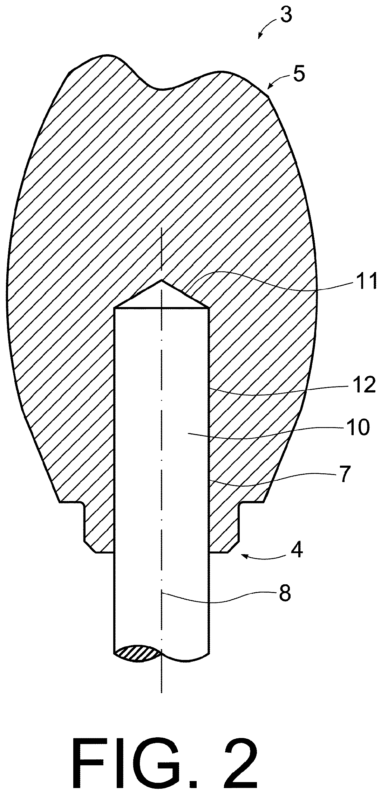

As shown in Figure 2, a first hole (7) is then drilled from said first end (4) and toward the interior of the main body (3). Said first hole (7) is arranged in a first direction (8) intended to coincide with (or be parallel to) the longitudinal central shaft of the dental implant that will support the final dental prosthesis (1) once said dental prosthesis (1) is placed on a dental implant in a patient's mouth.

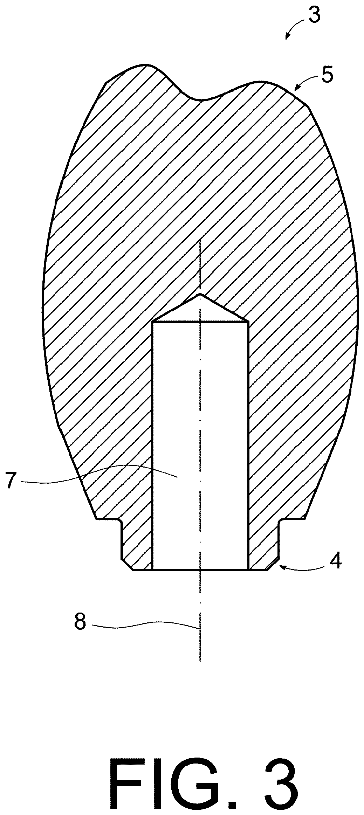

As can be seen, the first hole (7) is cylindrical. Drilling is preferably carried out with a drill bit (10) that has a cutting tip (11) and non-cutting side walls (12) along the entire length of the drill bit (10). This means that preferably, only the tip (11) of the drill bit (10) is sharp. In this way, drilling of a first hole (7) which is cylindrical (i.e. has cylindrical side walls) and arranged in the desired direction is achieved with total precision. Said hole (7) is shown, now without the drill bit (10), in Figure 3.

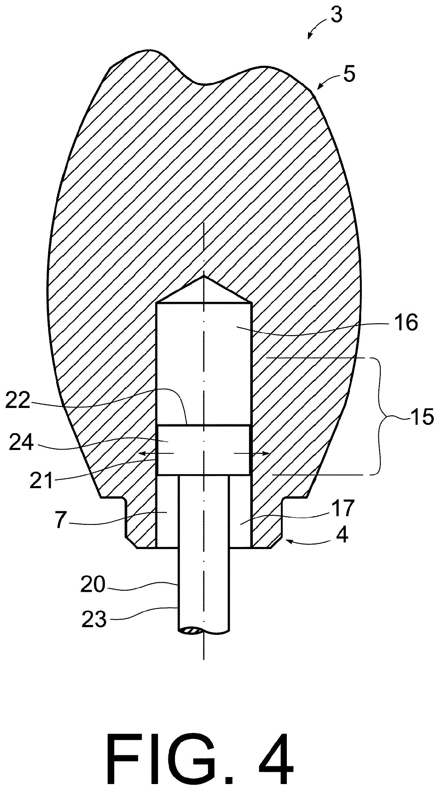

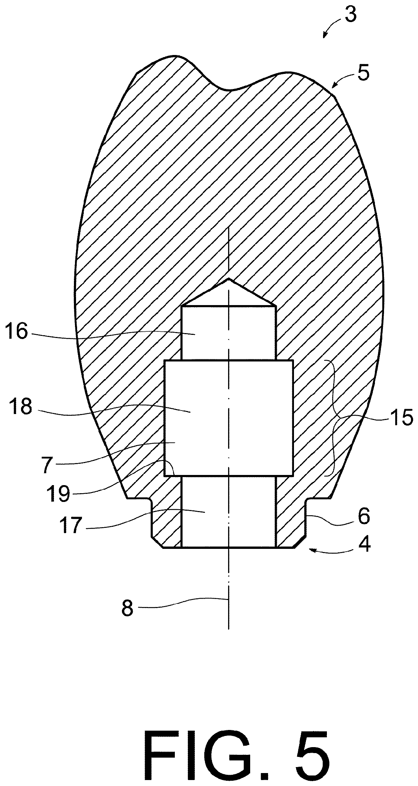

Next, as illustrated in Figure 4, an intermediate area (15) of said first hole (7) that lies between an inner end (16) and an outer end (17) of the first hole (7) is milled and widened laterally. In this way, as can be seen in Figure 5, which illustrates the result of the milling in Figure 4, said intermediate area (15) becomes wider than the inner end (16) and the outer end (17) of the first hole (7), i.e. the first hole (7) is provided with an intermediate widened area (18). As shown in Figure 5, the outer end (17) of the first hole (7) extends along the neck (6) and toward the interior of the main body (3), slightly beyond the neck (6). In turn, the widened area (18) is arranged beyond the neck (6), i.e. in the rest of the main body (3) which is wider than the neck (6). An annular and transversal seating surface (19) is formed in the lower area of the widened area (18), surrounding the outer end (17) of the first hole (7). It is on said seating surface (19) of the widened area (18) where the head of the screw (not shown), intended to tighten and secure the dental prosthesis (1) against the intermediate part or dental implant (not shown) to which the dental prosthesis (1) is fixed, will be supported.

Preferably, as shown in Figure 4, this step of milling and widening the intermediate area (15) of the first hole (7) is carried out with a mill bit or burr (20) with cutting side walls (21) and a non-cutting distal end (22). This enables a cylindrical widened area (18) to be formed while eliminating the risk that the tip of the burr (20) might longitudinally mill the first hole (7) beyond the intermediate area (15) in which milling of said widened area (18) is desired. More specifically, as shown in Figure 4, the burr (20) includes an elongated body or shaft (23), and a head (24), where said head (24) extends from said shaft (23), is wider than the shaft (23) and has the aforementioned cutting side walls (21) and non-cutting distal end (22).

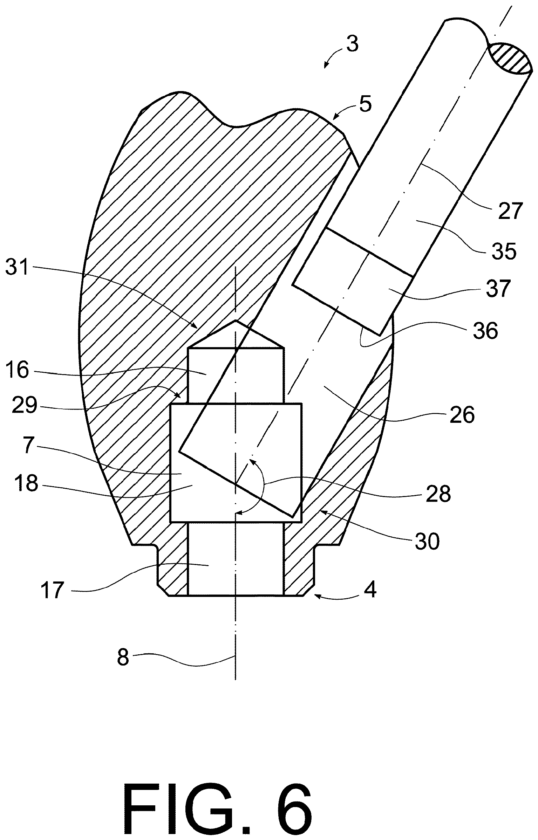

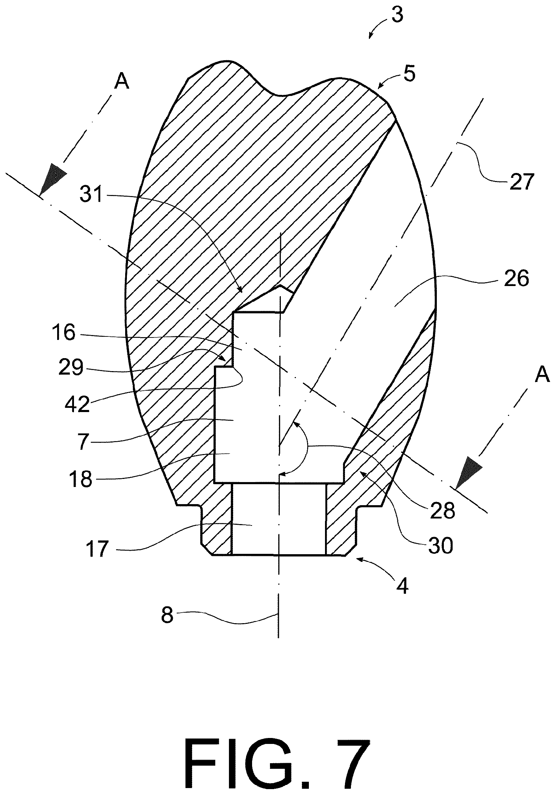

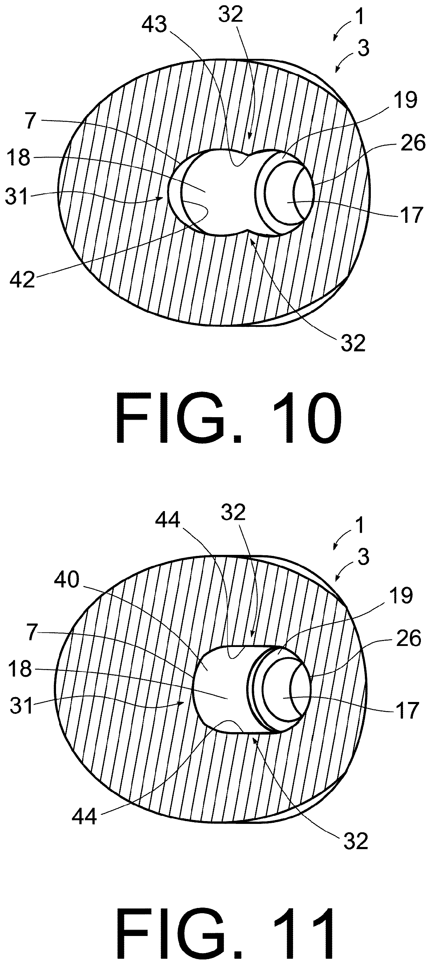

Next, as shown in Figure 6, a cylindrical second hole (26) is drilled, from the second end (5) of the main body (3) and toward the first hole (7). The second hole (26) extends in a second direction (27), which is angled in relation to the first direction (8), i.e. forms an angle (28) greater than zero and less than 180° with the first direction (8). As can be observed in Figure 7, which shows the main body (3) once the second hole (26) has been drilled, said second hole (26) is connected with the first hole (7) and said holes (7, 26) jointly form a through inner channel that extends from the first end (4) to the second end (5) of the main body (3). These communicating holes (7, 26) converge in an angled connection area (29). Said angled connection area (29) has an inner area (30), which is where the angle (28) is formed, an outer area (31) opposite the angle (28), and side areas (32), visible in Figures 10 and 11.

On another hand, the drilling of the second hole (26) is preferably carried out in such a way that the second hole (26) extends to the widened area (18) of the first hole (7). This enables the volume of the angled connection area (29) to be increased while the entrance of the second hole (26), i.e. the opening to the outside of the second hole (26) located at the second end (5) of the main body (3), remains relatively narrow.

Preferably, as illustrated in Figure 6, the step of drilling a second hole (26) is carried out with a tool (35) which has a cutting tip (36) and which can also have cutting side walls (37) adjacent to said cutting tip (36). The cutting tip (36) pierces and forms the second hole (26) in a forward direction, i.e. towards the interior of the main body (3) in the second direction (27). In the event that the tool has cutting side walls (37), as shown in the figure, a helical drilling can be performed so that the tool (35) not only drills forward as it advances inside the main body (3) but also widens the walls of the second hole (26) so as to obtain a second hole (26) with a greater diameter than that of the tool (35).

Figure 10 shows a cross sectional view of the main body (3) in the situation shown in Figure 7. In said figure, edges (42, 43) formed respectively at the intersection between the first hole (7) and the second hole (26), and at the intersection between the inner end (16) and the widened area (18) of the first hole (7) can be seen. Said edges (42, 43) protrude towards the interior of the inner bore (2).

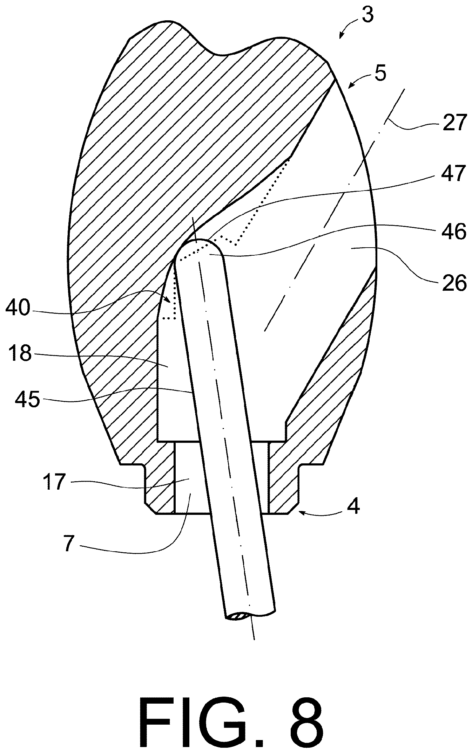

Then, as shown in Figure 8, the angled connection area (29) between the holes (7, 26) is milled and widened, both at its outer area (31) and laterally. On milling the outer area (31), the edges (42) of the inner end (16) of the first hole (7) are eliminated, as shown in Figure 11. On milling laterally, the lateral edges (43) between the first hole (7) and the second hole (26) are eliminated, as shown in Figure 11, for example by lowering the edges (43) until side surfaces (44) tangent to the first hole (7) and the second hole (26) are achieved. An elbow (40) or external and lateral widening, which can be seen more clearly in Figure 9, is thus formed in the angled connection area (29). Said elbow (40) is devoid of edges protruding towards the inside of the inner bore (2) in the outer area (31) and side areas (32) of the angled connection area (29). In this way, the inner through bore (2) according to the present invention is obtained. The elbow (40) provides an additional space for unobstructedly turning the head of a screw (not shown) that is either inserted through the second hole (26) and rotates in the angled connection area (29) to move towards the first hole (7), or is extracted from the first hole (7) towards the second hole (26).

Preferably, on milling and widening the inner end (16) of the first hole (7), the edges (42) present on said inner end (16) of the first hole (7) are smoothed. This facilitates the smooth movement of the screw through said angled connection area (29), especially during extraction of the screw.

As shown in Figure 8, this step of milling and widening an inner end (16) of the first hole (7) is carried out with a mill bit or burr (45) that has a cutting tip (46). Said cutting tip (46) can be, for example, spherical or ellipsoidal in shape, thereby enabling a continuous smooth milled surface to be obtained.

## Claims

1. Method of manufacturing a dental prosthesis (1), intended to be connected directly or indirectly to a dental implant, wherein said dental prosthesis includes an angled inner through bore (2), **characterized in that** it comprises the steps of:
a) obtaining a main body (3) of a dental prosthesis (1), wherein said main body (3) is provided with a first end (4) intended to be oriented towards a dental implant and a second end (5) opposite to said first end (4);
b) drilling a first hole (7) in said first end (4) in a first direction (8);
c) milling and widening an intermediate area (15) of said first hole (7), thus obtaining a widened area (18);
d) drilling a second hole (26) in said second end (5) in a second direction (27) that forms an angle other than zero with the first direction (8), with said second hole (26) extending to the first hole (7); and
e) laterally milling and widening an inner end (16) of the first hole (7) that protrudes from the second hole (26) to form an elbow (40).

2. Method according to claim 1, **characterized in that** said step of drilling a first hole (7) is carried out with a drill bit (10) having a cutting tip (11).

3. Method according to claim 2, **characterized in that** said drill bit (10) has entirely non-cutting side walls (12).

4. Method according to claim 1, **characterized in that** said step of milling and widening an intermediate area (15) of said first hole (7) is carried out with a burr (20) having cutting side walls (21) and a non-cutting distal end (22).

5. Method according to claim 4, **characterized in that** the burr (20) comprises a shaft (23) and a head (24), wherein said head (24) extends from said shaft (23) and comprises said cutting side walls (21) and a said non-cutting distal end (22).

6. Method according to claim 5, **characterized in that** said widened area (18) is cylindrical.

7. Method according to claim 1, **characterized in that** said step of drilling a second hole (26) is carried out with a tool (35) having a cutting tip (36).

8. Method according to claim 7, **characterized in that** said tool (35) further comprises cutting side walls (37) adjacent to said cutting tip (36).

9. Method according to claim 1, **characterized in that**, in said step of drilling a second hole (26), the second hole (26) extends to the widened area (18) of the first hole (7).

10. Method according to claim 1, **characterized in that** said step of milling and widening an inner end (16) of the first hole (7) is carried out with a burr (45) having a cutting tip (46).

11. Method according to claim 10, **characterized in that** one or more edges (42) present on said inner end (16) of the first hole (7) are smoothed in said step of laterally milling and widening an inner end (16) of the first hole (7).

12. Method according to claim 10, **characterized in that** said cutting tip (46) has a resultant spherical or ellipsoidal outer cutting surface (47).

## Patentansprüche

1. Methode der Herstellung einer Zahnprothese (1), die dazu dienen soll, direkt oder indirekt an ein Zahnimplantat angeschlossen zu werden, wobei besagte Zahnprothese eine abgewinkelte innere Bohrung (2) aufweist, **dadurch gekennzeichnet, dass** sie folgende Schritte umfasst:
a. die Erlangung des Hauptteils (3) einer Zahnprothese (1), wobei besagter Hauptteil (3) mit einem ersten Ende (4) versehen ist, das zu einem Zahnimplantat ausgerichtet sein soll,, und einem zweiten Ende (5) gegenüber dem ersten Ende (4);
b. Bohrung eines ersten Loches (7) in besagtem ersten Ende (4) in eine erste Richtung (8);
c. Fräsbearbeitung und Erweiterung eines Zwischenbereiches (15) von besagtem ersten Loch (7), womit ein erweiterter Bereich (18) erzielt wird;
d. Bohrung eines zweiten Loches (26) in besagtem zweiten Ende (5) in eine zweite Richtung (27), die mit der ersten Richtung (8) einen anderen Winkel als null bildet, wobei sich besagtes zweites Loch (26) bis zu dem ersten Loch (7) erstreckt; und
e. seitliche Fräsbearbeitung und Erweiterung eines inneren Endes (16) des ersten Loches (7), das aus dem zweiten Loch (26) herausragt und einen Ellbogen (40) bildet.

2. Methode, in Übereinstimmung mit Anspruch 1, **dadurch gekennzeichnet, dass** besagter Schritt des Bohrens eines ersten Loches (7) mit einem Bohrer (10) durchgeführt wird, der mit einem Schneideaufsatz (11) ausgestattet ist.

3. Methode, in Übereinstimmung mit Anspruch 2, **dadurch gekennzeichnet, dass** besagter Bohrer (10) komplett nicht schneidende Seitenteile (12) aufweist.

4. Methode, in Übereinstimmung mit Anspruch 1, **dadurch gekennzeichnet, dass** besagter Schritt der Fräsbearbeitung und der Erweiterung eines Zwischenbereiches (15) von besagtem ersten Loch (7) mit einem Frässtift (20) durchgeführt wird, welcher schneidende Seitenteile (21) und nicht schneidende distale Enden (22) aufweist.

5. Methode, in Übereinstimmung mit Anspruch 4, **dadurch gekennzeichnet, dass** der Frässtift (20) einen Schaft (23) und einen Kopf (24) umfasst, wobei besagter Kopf (24) sich von besagtem Schaft (23) aus erstreckt und besagte schneidende Seitenteile (21) und eines der besagten nicht schneidenden distalen Enden (22) aufweist.

6. Methode, in Übereinstimmung mit Anspruch 5, **dadurch gekennzeichnet, dass** besagter erweiterter Bereich (18) zylindrisch ist.

7. Methode, in Übereinstimmung mit Anspruch 1, **dadurch gekennzeichnet, dass** besagter Schritt des Bohrens eines zweiten Loches (26) mit einem Werkzeug (35) durchgeführt wird, das mit einem Schneideaufsatz (36) ausgestattet ist.

8. Methode, in Übereinstimmung mit Anspruch 7, **dadurch gekennzeichnet, dass** besagtes Werkzeug (35) außerdem schneidende Seitenteile (37) umfasst, die an besagten Schneideaufsatz (36) angrenzen.

9. Methode, in Übereinstimmung mit Anspruch 1, **dadurch gekennzeichnet, dass** bei besagtem Schritt des Bohrens eines zweiten Loches (26) sich das zweite Loch (26) bis zu dem erweiterten Bereich (18) des ersten Loches (7) hin erstreckt.

10. Methode, in Übereinstimmung mit Anspruch 1, **dadurch gekennzeichnet, dass** besagter Schritt der Fräsbearbeitung und der Erweiterung eines inneren Endes (16) des ersten Loches (7) mit einem Frässtift (45) durchgeführt wird, der mit einem Schneideaufsatz (46) ausgestattet ist.

11. Methode, in Übereinstimmung mit Anspruch 10, **dadurch gekennzeichnet, dass** eine oder mehrere Kanten (42), die an besagtem inneren Ende (16) des ersten Loches (7) vorhanden sind, in besagtem Schritt der seitlichen Fräsbearbeitung und der Erweiterung eines inneren Endes (16) des ersten Loches (7) geglättet werden.

12. Methode, in Übereinstimmung mit Anspruch 10, **dadurch gekennzeichnet, dass** besagter Schneideaufsatz (46) eine sich ergebende kugelförmige oder ellipsoide äußere schneidende Oberfläche (47) aufweist.

## Revendications

1. Procédé de fabrication d'une prothèse dentaire (1), destinée à être connectée directement ou indirectement à un implant dentaire, dans lequel ladite prothèse dentaire comprend un alésage traversant interne angulaire (2), **caractérisé en ce qu'**il comprend les étapes consistant à :
a) obtenir un corps principal (3) d'une prothèse dentaire (1), dans lequel ledit corps principal (3) est muni d'une première extrémité (4) destinée à être orientée vers un implant dentaire et d'une seconde extrémité (5) opposée à ladite première extrémité (4) ;
b) percer un premier trou (7) dans ladite première extrémité (4) dans une première direction (8) ;
c) fraiser et élargir une zone intermédiaire (15) dudit premier trou (7), obtenant ainsi une zone élargie (18) ;
d) percer un second trou (26) dans ladite seconde extrémité (5) dans une seconde direction (27) qui forme un angle différent de zéro avec la première direction (8), ledit second trou (26) s'étendant jusqu'au premier trou (7) ; et
e) fraiser et élargir latéralement une extrémité intérieure (16) du premier trou (7) qui fait saillie du second trou (26) pour former un coude (40).

2. Procédé selon la revendication 1, **caractérisé en ce que** ladite étape de perçage d'un premier trou (7) est réalisée avec une mèche (10) ayant une pointe de coupe (11).

3. Procédé selon la revendication 2, **caractérisé en ce que** ladite mèche (10) présente des parois latérales (12) entièrement non coupantes.

4. Procédé selon la revendication 1, **caractérisé en ce que** ladite étape de fraisage et d'élargissement d'une zone intermédiaire (15) dudit premier trou (7) est réalisée avec une fraise (20) ayant des parois latérales coupantes (21) et une extrémité distale non coupante (22).

5. Procédé selon la revendication 4, **caractérisé en ce que** la fraise (20) comprend un arbre (23) et une tête (24), dans lequel ladite tête (24) s'étend depuis ledit arbre (23) et comprend lesdites parois latérales de coupe (21) et une dite extrémité distale non coupante (22).

6. Procédé selon la revendication 5, **caractérisé en ce que** ladite zone élargie (18) est cylindrique.

7. Procédé selon la revendication 1, **caractérisé en ce que** ladite étape de perçage d'un second trou (26) est réalisée avec un outil (35) ayant une pointe de coupe (36).

8. Procédé selon la revendication 7, **caractérisé en ce que** ledit outil (35) comprend en outre des parois latérales de coupe (37) adjacentes à ladite pointe de coupe (36).

9. Procédé selon la revendication 1, **caractérisé en ce que**, dans ladite étape de perçage d'un second trou (26), le second trou (26) s'étend jusqu'à la zone élargie (18) du premier trou (7).

10. Procédé selon la revendication 1, **caractérisé en ce que** ladite étape de fraisage et d'élargissement d'une extrémité intérieure (16) du premier trou (7) est réalisée avec une fraise (45) ayant une pointe de coupe (46).

11. Procédé selon la revendication 10, **caractérisé en ce qu'**un ou plusieurs bords (42) présents sur ladite extrémité intérieure (16) du premier trou (7) sont lissés lors de ladite étape de fraisage et d'élargissement latéral d'une extrémité intérieure (16) du premier trou (7).

12. Procédé selon la revendication 10, **caractérisé en ce que** ladite pointe de coupe (46) présente une surface de coupe extérieure sphérique ou ellipsoïdale résultante (47).
